# EUROPEAN PATENT APPLICATION

(11) **EP 4 603 825 A1**
(43) Date of publication of application: **20.08.2025**
(21) Application number: 25154227.0
(22) Date of filing: 27.01.2025
(51) Int. Cl.: G01N 21/88, G01N 21/94, G01N 21/954

(54) **IMAGING SYSTEM FOR BULK TRANSPORT VEHICLES**

(30) Priority: 13.02.2024 US 202418440691
(71) Applicant: Dimension Product Solutions LP, Crosby, TX 77532-6022 (US)
(72) Inventor: Cook, George T, Crosby, 77562-6022 (US); Lusk, Burt, La Porte, 77571 (US)
(74) Representative: IPAZ

(57) **Abstract**

An imaging unit is provided and placed in an access opening of a storage container of a transport vehicle, where the imaging unit includes a mounting assembly including an upper member and a mounting arm extending from the upper member, the upper member configured to rotate the mounting arm about a longitudinal axis and a camera unit rotatably attached to the mounting arm and configured to rotate about a lateral axis that is transverse to the longitudinal axis, where the camera unit is rotated about the longitudinal axis and the lateral axis to a designated position within the storage container and takes at least one image of the inner surfaces of the storage container.

## Description

### BACKGROUND

The present application relates generally to a system for inspecting the inner surfaces of storage containers of bulk transport vehicles, and more particularly, to an automated, self-contained imaging system that takes images of the inner surfaces of the storage containers of bulk transport vehicles to inspect the cleanliness and structural integrity of the storage containers.

Bulk transport vehicles, such as railcars and trucks, have storage containers that are used to store and transport solid materials, such as seeds, grains and granular or powdered materials, and liquids, such as chemicals and food stuffs, between different locations. For example, bulk transport vehicles are used to transport bulk solid materials from a manufacturer to a processing plant.

During transport, the bulk solid materials may move or shift within the storage containers and impact the inner surfaces of the walls of the storage containers. The bulk solid materials may also impact the inner surfaces of the storage containers during loading and unloading of these vehicles. Over time, the repeated impact of the bulk solid materials on the walls may cause wear and/or damage to the walls of the storage containers and compromise the structural integrity of the walls. Also, the impact of the bulk solid materials on the walls may cause a coating, such as a sealant, on the inner surfaces of the walls to chip or flake, where the chips and/or flakes will mix with the bulk solid materials in the storage containers, which decreases the quality and consistency of the bulk solid materials.

A method for inspecting the inner surfaces of the walls is to have a person physically enter each of the storage containers through an access opening or hatch. Once inside, the person visually inspects the inner surfaces of the walls and documents any dust and/or residual product on the inner surfaces of the walls and the wear and/or damage to the walls. The person may also take pictures or video of the walls using an imaging device, such as camera. Any dust, residual product, wear and/or damage found on the inner surfaces of the walls of the storage containers is then removed and/or repaired.

An issue with the conventional inspection system is that the coating covering the inner surfaces of the walls in the storage containers is typically a uniform color. The uniform color of the protective coating makes it difficult to detect variances on the walls such as wear and/or damage on the inner surfaces of the walls either visually or with cameras. Another issue with the conventional inspection system is that physically inspecting the interior of each storage container of bulk transport vehicles is that physically entering each storage container by a person requires a significant amount of time. This leads to transportation and processing delays, which increases transportation and processing costs.

Therefore, it is desirable to provide an automated inspection system for storage containers of bulk transport vehicles that efficiently and accurately inspects the storage containers.

### SUMMARY

The present imaging system is an automated, self-contained imaging system that effectively and efficiently takes images of the inner surfaces of the walls of storage containers of bulk transport vehicles to provide detailed information on the cleanliness and structural integrity of the walls.

In an embodiment, an imaging unit is provided and placed in an access opening of a storage container of a transport vehicle, where the imaging unit includes a mounting assembly including an upper member and a mounting arm extending from the upper member, the upper member configured to rotate the mounting arm about a longitudinal axis and a camera unit rotatably attached to the mounting arm and configured to rotate about a lateral axis that is transverse to the longitudinal axis, where the camera unit is rotated about the longitudinal axis and the lateral axis to a designated position within the storage container and takes at least one image of the inner surfaces of the storage container.

In another embodiment, an imaging unit is provided and placed in an access opening of a storage container of a transport vehicle, where the imaging unit includes a mounting assembly including an upper member having a top wall and a base member rotatably attached to the top wall, a mounting arm extending transversely from the base member, the base member configured to rotate the mounting arm about a longitudinal axis, a camera unit rotatably attached to the mounting arm and configured to rotate about a lateral axis that is transverse to the longitudinal axis, the camera unit includes at least one lens and a pair of lidar sensors positioned on opposing sides of the at least one lens and a controller in communication with the base member and the camera unit, the controller being configured to rotate the base member and the camera unit and control the operation of the camera unit, where the camera unit is rotated about the longitudinal axis and the lateral axis to a designated position within the storage container and takes at least one image of the inner surfaces of the storage container.

### BRIEF DESCRIPTION OF THE DRAWINGS

Fig. 1 is a side view of a transport vehicle with a wall removed showing an embodiment of the present imaging unit mounted in the access openings of the storage containers of the transport vehicle.
Fig. 2 is an end view of the transport vehicle of Fig. 1 where the end wall of the transport vehicle is removed.
Fig. 3 is a right side perspective view of the imaging unit shown in Figs. 1 and 2.
Fig. 4 a right side view of the imaging unit of Fig. 3.
Fig. 5 is a front view of the imaging unit of Fig. 3.
Fig. 6 is a left side perspective view of the imaging unit of Fig. 3.
Fig. 7 a left side view of the imaging unit of Fig. 3.
Fig. 8 is a rear view of the imaging unit of Fig. 3.
Fig. 9 is an exploded perspective view of the imaging unit of Fig. 3.
Fig. 10 is another exploded perspective view of the imaging unit of Fig. 3.
Fig. 11 is a perspective view of an embodiment of the camera unit of the imaging unit of Fig. 3.
Fig. 12 is a perspective view of the camera unit of Fig. 11 with a wall removed from the camera unit.
Fig. 13 is an exploded perspective view of an embodiment of a drive assembly mounted inside the base member of Fig. 3.
Fig. 14 is an exploded perspective view of the drive assembly of Fig. 13.
Fig. 15 is an exploded perspective view of another embodiment of the drive assembly mounted inside the base member of Fig. 3.
Fig. 16 is an exploded perspective view of the drive assembly of Fig. 15 mounted inside the camera unit.

### DETAILED DESCRIPTION

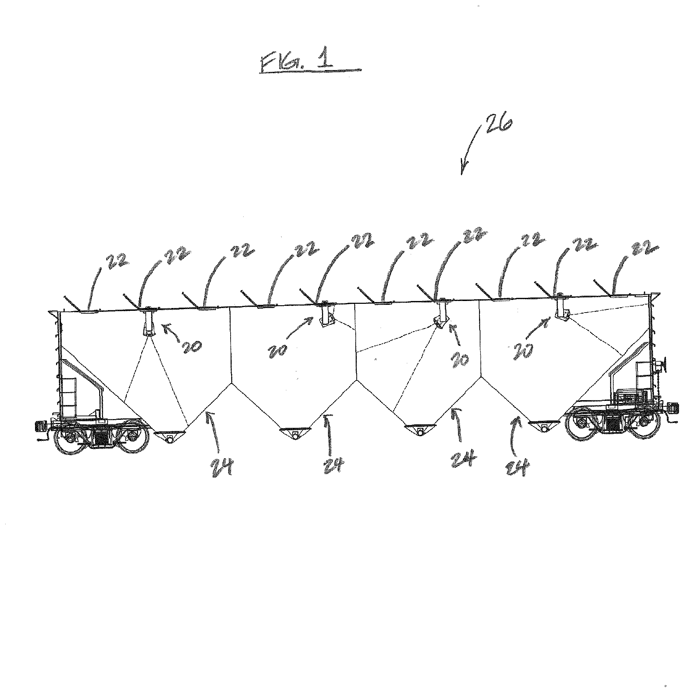

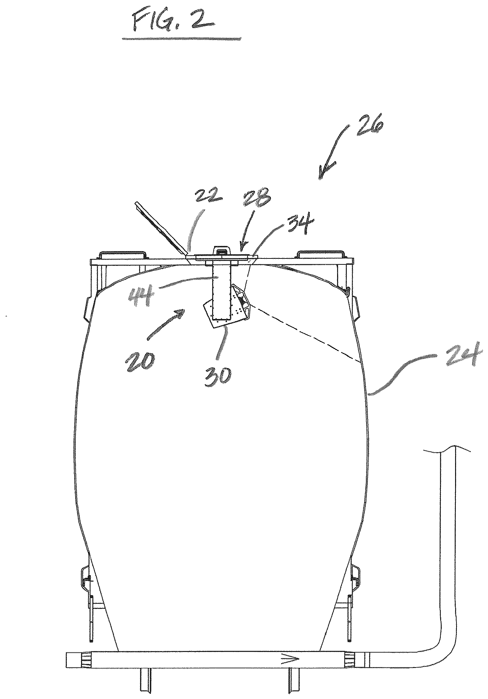

Figs. 1 and 2 show an imaging system including an imaging unit generally indicated by 20, mounted in at least one of the access openings 22 of storage containers 24 of a bulk transport vehicle 26, such as a railcar, a truck or other transport vehicle, where the imaging unit 20 moves in multiple directions and takes one or more images of each inner surface of the walls of the storage containers 24. In an embodiment, the images taken by the imaging unit 20 are high resolution digital images but it is contemplated that other types of images may be taken. The image or images taken by the imaging unit 20 are used to determine the cleanliness of the storage containers 24, i.e., if any product and/or dust on the inner surfaces of the walls is below a predetermined residual product limit and/or dust limit, and/or to check the structural integrity of the walls of the storage containers 24, i.e., detect wear and/or damage to the inner surfaces of the walls. In operation, the imaging unit 20 moves in multiple directions within the storage containers to take images of the inner surfaces of the top wall, side walls and/or bottom wall or bottom walls of the storage containers 24 to efficiently inspect the walls without requiring a person to physically enter the storage container or storage containers of a bulk transport vehicle.

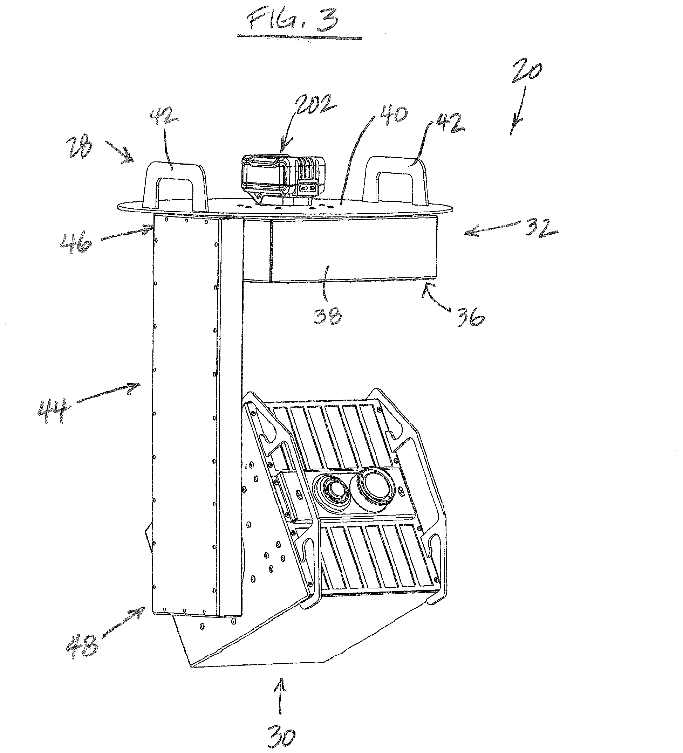

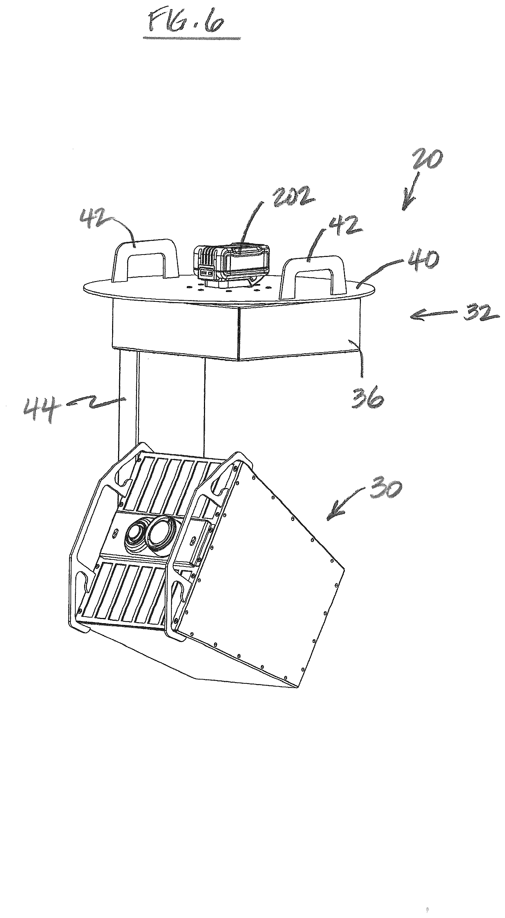

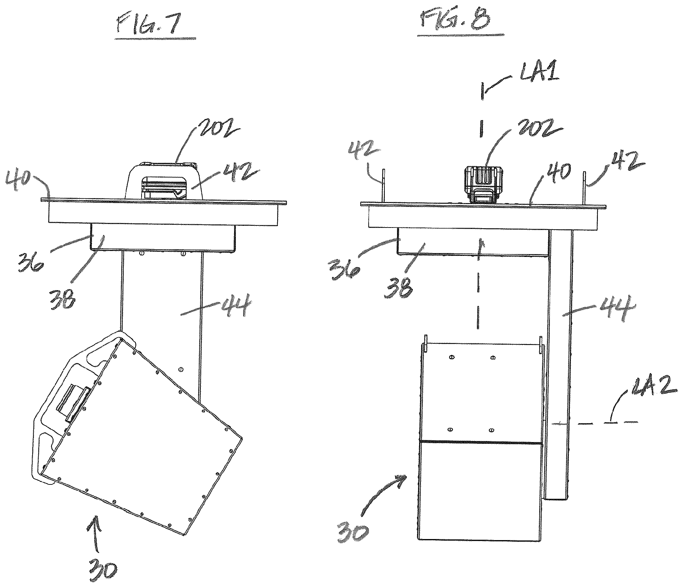

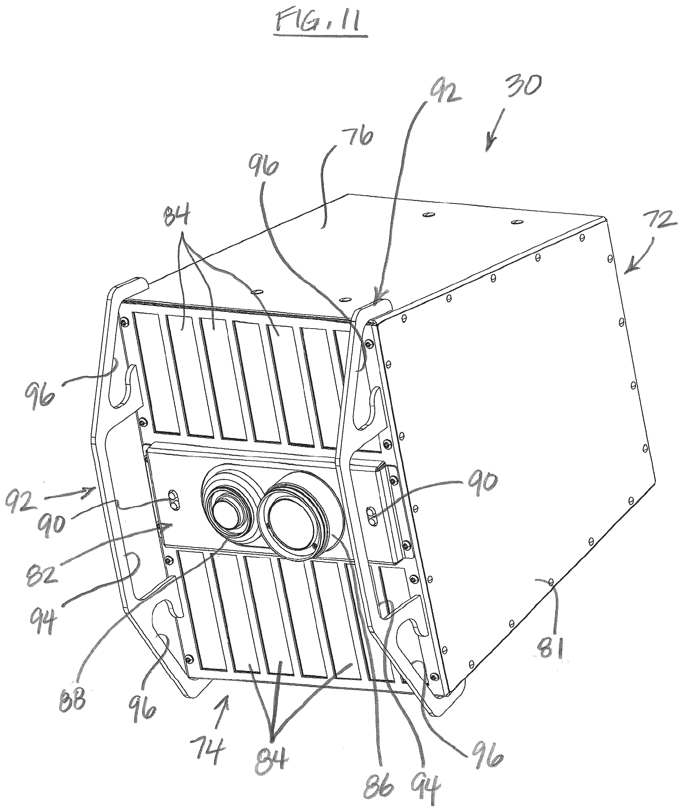

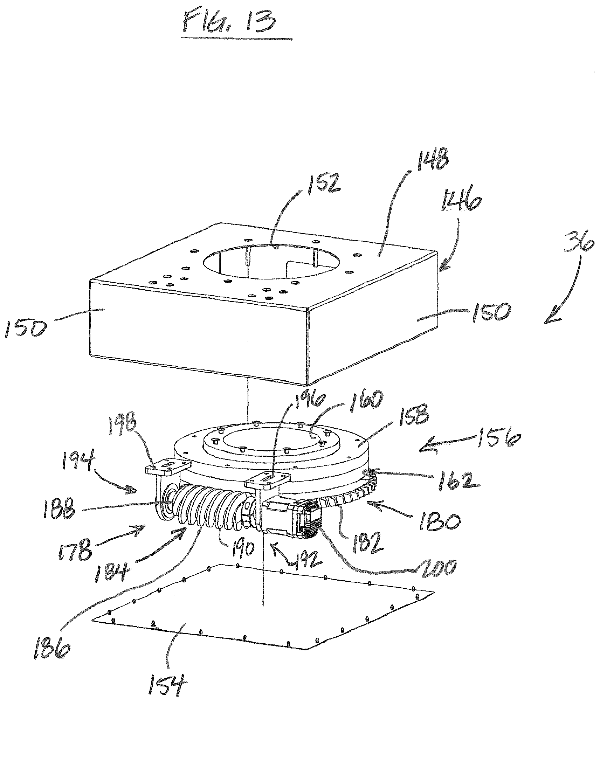

Referring now to Figs. 3 to 14, the imaging unit 20 includes a mounting assembly 28 and a camera unit 30 movably attached to the mounting assembly. The mounting assembly 28 includes an support member 32 that is placed on and engages a top wall 34 surrounding an access opening 22 of one or more of the storage containers 24 of a bulk transport vehicle 26 or other vehicle and supports the imaging unit lowered into the access openings. As shown, the support member 32 includes a base member 36 having a housing 38 and a top planar plate 40 with a generally circular shape attached to the housing, where a diameter of the plate 40 is greater than a length and/or a width of the housing 38 so that the plate 40 extends outwardly from the outermost edges of the housing. As described below, the base member 36 is movably attached to the plate 40 and is configured to move or rotate 360 degrees in a clockwise or in a counterclockwise direction relative to the plate 40. A pair of handles 42 are spaced apart and attached to an upper surface of the plate 40 to enable a person or a lifting machine to grab the handles and move and/or manipulate the position of the imaging unit 20 relative to and in an access opening 22 of one or more of the storage containers 24. For example, the handles 42 may be used to grasp and mount the imaging unit 20 in an access opening 22 or grasp and remove the imaging unit 20 from an access opening 22 of a storage container 24. A mounting arm 44 extends transversely to the plate 40 where a first end 46 of the mounting arm 44 is attached to the housing 38 of the base member 36 and an opposing, second end 48 of the mounting arm is attached to the camera unit 30.

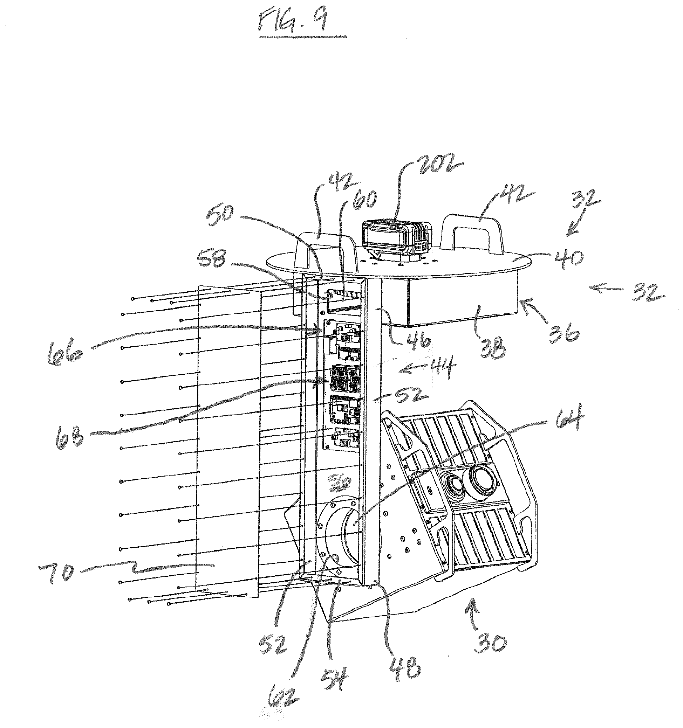

Referring to Fig. 9, the mounting arm 44 includes a top wall 50, opposing sidewalls 52, a bottom wall 54 and a generally planar base wall 56 where the top wall, the sidewalls and the bottom wall are attached to the base wall by fasteners or welding and extend from the base wall. The base wall 56 includes a first opening 58 that is aligned with a corresponding opening 60 in the base member 36 and a second opening 62 that is aligned with a corresponding opening 64 in the camera unit 30. A plurality of circuit boards 66 and/or electrical connectors 68 are attached to an inner surface of the base wall 56 and configured to communicate with the camera unit 30 to control the movement of the camera unit relative to the top wall of the base member 36 and to the mounting arm 44, and control the operation of the camera unit 30. A cover 70 is removably attached to the top wall 50, the sidewalls 52 and the bottom wall 54 of the mounting arm 44 by fasteners and enables a person to access the interior of the mounting arm 44.

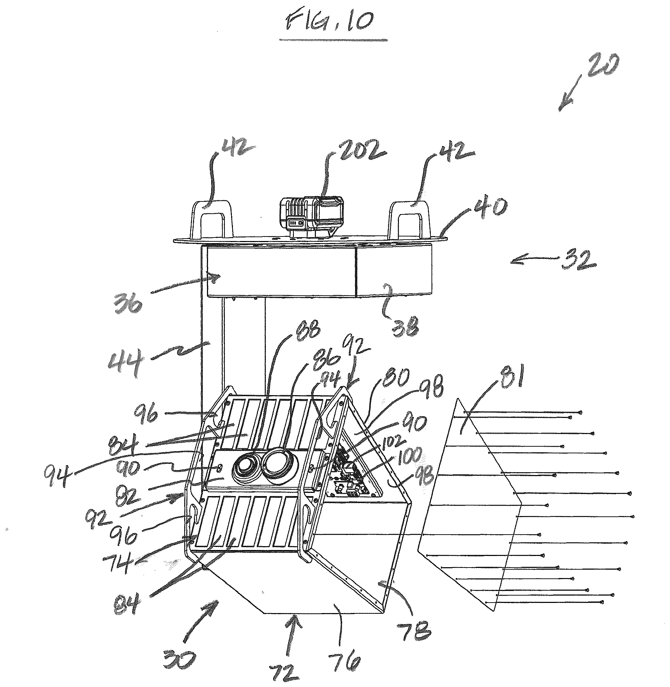

Referring to Figs. 10 to 12, an embodiment of the camera unit 30 is shown where the camera unit 30 includes a housing 72 defining an interior space where the housing has a front wall 74, opposing sidewalls 76, a rear wall 78 and a top wall 80 and a cover 81 that are connected together by fasteners, welding or other suitable attachment method. The front wall 74 of the camera unit 30 includes a central member 82 and a plurality of recessed areas 84 on each side of the central member where the recessed areas each have a generally rectangular shape. As shown, the central member 82 includes an imaging lens 86 and a light source 88. The imaging lens 86 is part of a digital camera located within the camera unit 30, where the digital camera that takes high resolution images of the inner surfaces of the walls of the storage containers 24. It should be appreciated that the camera unit 30 may have a single lens and camera or a plurality of lenses and cameras. Also, the light source 88 may be any suitable lighting device and emits a light that illuminates the interior space of the storage container 24. In an embodiment, the light source 88 emits diffused light but it is contemplated that the light source may emit other types of light.

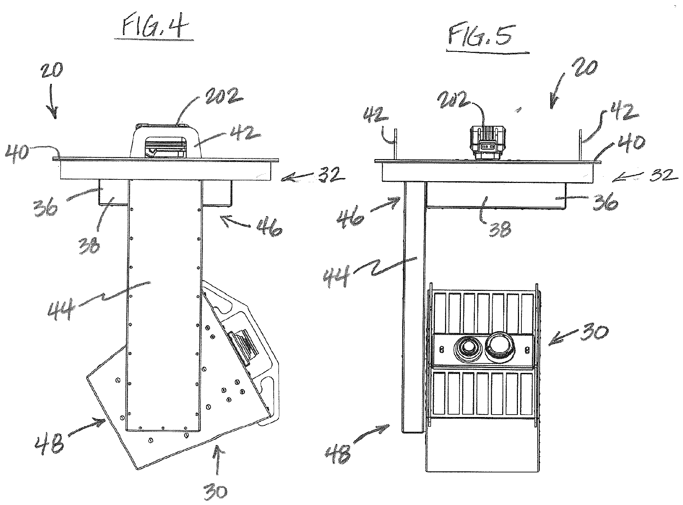

As shown in Fig. 5, two lidar sensors 90 are positioned on opposing sides of the central member 82 to determine a distance from the camera unit 30 and more specifically, the imaging lens 86, to a designated inner surface of the walls of a storage container 24. The measured distance is used to adjust the focus of the imaging lens or imaging lenses 86 of the camera unit 30 in real time. It should be appreciated that the camera unit 30 may have one or a plurality of the lidar sensors 90. In operation, each lidar sensor 90 emits pulsed light waves toward a designated surface inside the storage containers 24, where the pulsed light bounces off a designated surface and the reflected light returns to the lidar sensors. Each lidar sensor 90 uses the time it took for each pulsed light to return to the lidar sensor to calculate the distance that the pulsed light traveled, which is used to adjust the focus of the imaging lens or lenses 86 of camera unit 30 and the level or amount of light emitted by the light source 88 within each storage container 24 to optimize the precision and clarity of the images taken by the camera unit 30.

In the illustrated embodiment, a pair of handles 92 are located on opposing sides of the central member 82 where each handle has a generally trapezoidal shape with a central opening 94 and openings 96 on each side of the central opening. The handles 92 enable a person to grasp the camera unit 30 for mounting the camera unit on the mounting arm 44, grasp the camera unit 30 for removing the camera unit from the mounting arm 44 for maintenance or replacement and/or for manually moving the camera unit 30 to desired position relative to the walls of the storage containers 24.

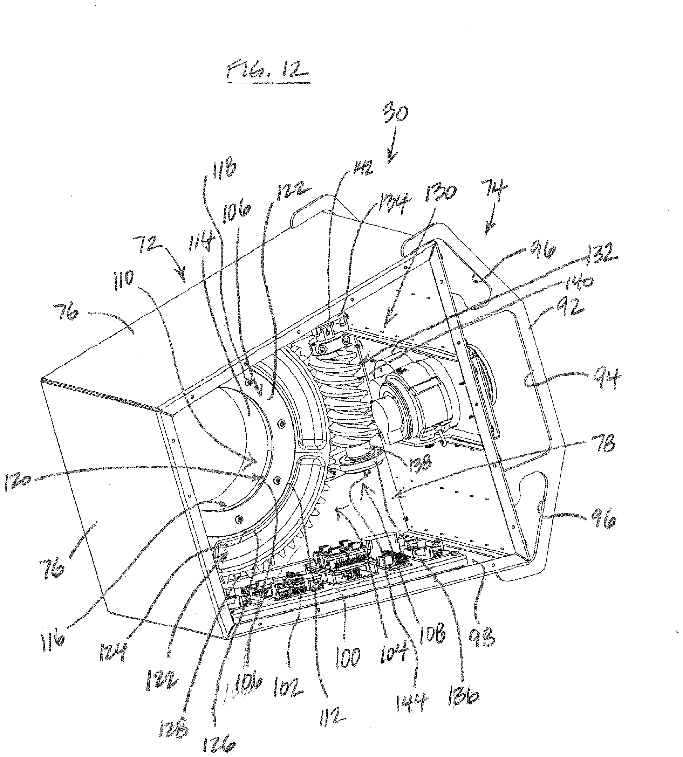

As shown in Figs. 9 and 12, the inner surface 98 of at least one of the sidewalls 76 of the camera unit 30 includes a circuit board 100 and/or electronic devices 102 configured to control the movement and operation of the camera unit 30. Additionally, a camera movement mechanism 104 is attached to an inner surface 106 of the rear wall 78 of the housing 72 and controls the movement of the camera unit 30 relative to the mounting arm 44.

In the illustrated embodiment, the camera movement mechanism 104 includes a rotation assembly 106 and a gear assembly 108 in communication with the circuit board 100 via electrical wiring or electrical cables. As shown, the rotation assembly 106 includes a first mounting member 110 and a second mounting member 112 that is rotatably attached to the first mounting member. The first mounting member 110 has a cylindrical body 114 and a flange 116 extending transversely from the body. As shown in Figs. 9 and 12, the body 114 extends through the opening in the mounting arm 44 so that the flange 116 engages the inner surface of the bottom wall 54 of the mounting arm 44. The flange 116 includes a plurality of spaced holes 118 configured to receive fasteners to secure the flange 116 and thereby the first mounting member 110 to the mounting arm 44. The second mounting member 112 has a cylindrical body 120 and a flange 122 extending transversely from the body. The body 120 of the second mounting member 112 is rotatably coupled to the first mounting member 110 so that the second mounting member rotates 360 degrees relative to the first mounting member 110.

To rotate the camera unit 30 relative to the mounting arm 44, the gear assembly 108 including a cylindrical drive gear 122 mounted to the second mounting member 112 using fasteners or other suitable attachment method, where the drive gear 122 includes a ring body 124 with a central opening 126 and a plurality of teeth 128 extending transversely from a peripheral outer surface of the ring body. The drive gear 122 is driven by a worm gear assembly 130 mounted to the inner surface of the rear wall 78 of the housing 72 where the worm gear assembly includes a worm gear member 132, a first end mount 134 and a second end mount 136. The worm gear member 132 has a shaft 138 with spiral threads 140 and a first end post 142 rotatably mounted to the first end mount 134 and a second end post 144 rotatably mounted to the second end mount 136. The first end mount 134 includes a motor, such as an electric motor, that is coupled to the first end post 142 of the worm gear member 132 and in communication with the circuit board 100. The motor rotates the first end post 142 and in turn, the worm gear member 132 at a predetermined rotational speed, where the rotational speed is controlled via the circuit board 100. As shown, the spiral threads 140 of the worm gear member 132 engage the teeth 128 on the drive gear 122 so when the worm gear member rotates, the spiral threads 140 cause the drive gear 122 to move in a clockwise or counterclockwise direction. It should be appreciated that the worm gear member 132 may rotate in a clockwise and/or counterclockwise direction to correspondingly move the drive gear 122 in a clockwise and/or counterclockwise direction.

Referring to Figs. 3, 13 and 14, the base member 36 includes the housing 146 where the housing has a top wall 148 and a plurality of sidewalls 150 attached together by fasteners, welding or other suitable attachment method. The top wall 148 includes a central opening 152 that is in communication with the interior space of the housing 146. A bottom wall or cover 154 is removably attached to the sidewalls 150 of the housing 146 by fasteners. A drive assembly including a rotation unit 156 is mounted to an inner surface of the top wall 148 and is in the interior space of the housing 146. The rotation unit 156 includes a first ring member 158 having a first opening 160 where the first ring member is attached to the inner surface of the top wall 148 of the housing 146 by fasteners, and a second ring member 162 having the same size and shape as the first ring member 158 where the second ring member is attached to the first ring member by fasteners. The first ring member 158 and the second ring member 162 define an interior space when the first ring member and the second ring member are attached together. A rotating member 164 is positioned in the interior space between the first ring member 158 and the second ring member 162 and is configured to rotate 360 degrees relative to the first ring member and the second ring member.

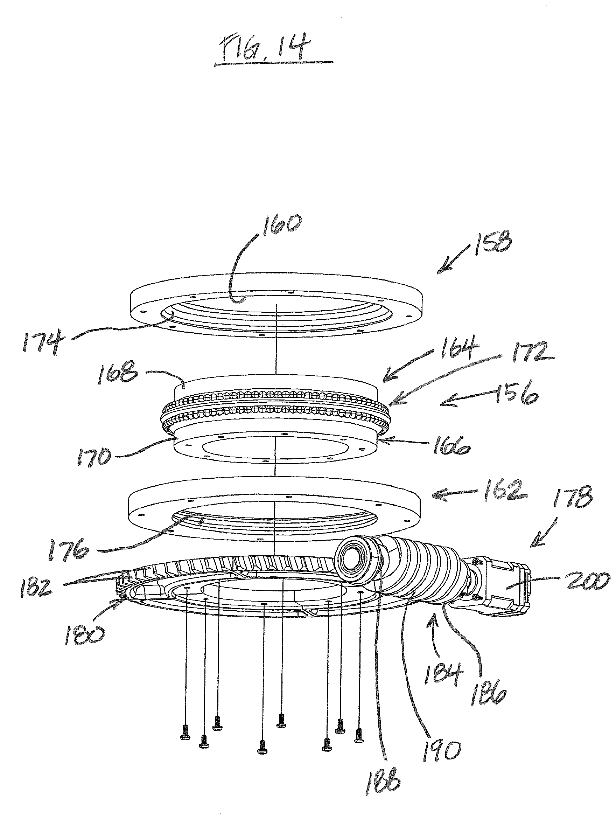

In the illustrated embodiment, the rotating member 164 includes a body 166 having an upper projecting wall 168 and a lower projecting wall 170. A bearing member 172 having a plurality of bearings is attached to the body 166 of the rotating member between the upper projecting wall 168 and the lower projecting wall 170 as shown in Fig. 14. Specifically, the bearing member 172 includes two rows of bearings where one of the rows of bearings engages a corresponding groove 174 on the inner surface of the upper projecting wall 168 and the other row of bearings engages a corresponding groove 176 on the inner surface of the lower projecting wall 170. In operation, the bearing member 172 helps to facilitate movement or rotation of the rotating member 164 relative to the first ring member 158 and the second ring member 162.

The upper projecting wall 168 is attached to the top wall 148 of the housing 146 by fasteners and the lower projecting wall 170 is attached to a gear assembly 178. The gear assembly 178 includes a drive gear 180 having a plurality of teeth 182 extending transversely from a peripheral surface of the drive gear, and a worm gear member 184. The worm gear member 184 includes a worm gear 186 having a shaft 188 with spiral threads 190 and a first end 192 and an opposing second end 194. The first end 192 includes a first gear mount 196 attached to the top wall 148 by fasteners and the second end 194 includes a second gear mount 198 attached to the top wall 148 by fasteners. The first end 192 and the second end 194 of the worm gear member 184 are each rotatably attached to the first gear mount 196 and the second gear mount 198 so that the worm gear member (shaft with spiral threads) rotates relative to the first end mount and the second end mount. A motor, such as an electric motor 200, is coupled to the second end 194 of the shaft 188 and rotates the worm gear member 184 in a clockwise direction and/or a counterclockwise direction. As shown, the spiral threads 190 of the worm gear member 184 engage the teeth 182 of the drive gear 180 so that rotation of the worm gear member 184 simultaneously rotates the drive gear. Similar to the worm gear member 184, the drive gear 180 rotates in a clockwise direction and/or a counterclockwise direction.

A battery pack 202 is attached to the outer surface of the top wall 148 of the housing 146 and provides power to the imaging unit 20, namely the circuit boards and all electronics of the imaging unit, and specifically provides power to the gear assemblies that rotate the camera unit 30 in multiple directions. The battery pack 202 may be any suitable battery device including a rechargeable battery pack.

In an embodiment, imaging unit 20 includes a controller (not shown) that controls the movement and operation of the camera unit 30. The controller 202 may be a computer or any suitable control unit or processor. In the illustrated embodiment, the controller 202 includes a single board computer (SBC) that controls the various circuits and sub-circuits of the imaging unit 20, such as the camera unit 30, lens actuators, light source 88, lidar sensors 90 and servo controller, via a plurality of communication busses such as a Universal Serial Bus (USB), Inter Integrated Circuit/Bus (I2C), Serial/Parallel Interface (SPI), Low Voltage Differential Signaling (LVDS) and direct general purpose inputs/outputs and/or General Purpose Inlets/Outlets (GPIOs).

In operation, the imaging unit 20 is manually placed, in a specific orientation, in an access hatch or access opening 22 of one of the storage containers 24 of a transport vehicle 26 so that the support member 32 of the mounting assembly 28 is supported by the wall 34 surrounding the access opening 22. Once the imaging unit 20 is in position, the housing 38 of the imaging unit is suspended inside the storage container 24 and free to rotate 360 degrees in multiple directions. Once mounted, an operator starts the imaging unit 20 via a wireless tablet or remote control panel. The camera unit 30 is rotated about a longitudinal axis and/or about a lateral axis that is substantially transverse to the longitudinal axis, to a desired position. The camera unit 30 then takes a series of digital photographs of an inner surface or multiple inner surfaces of the walls of the storage container 24 following a predetermined pattern based on the geometry of the storage container. In this way, the camera unit 30 produces high resolution digital images of the inner surfaces of the storage container 24 that are of the same resolution and same scale regardless of the distance that the camera unit 30 is from the inner surfaces of the walls of the storage container 24 when photographed from a single point. This is achieved by using multiple imaging lenses 86, adjustable diffused light from one or more light sources 88 and lidar sensors 90 as described above. Specifically, the lidar sensors 90 are positioned on opposing sides of the imaging lens or imaging lenses 86. The imaging lens or imaging lenses 86 of the camera unit 30 are then rotated as described above to face one or more of the inner surfaces of the walls of the storage container 24 as shown in Figs. 1 and 2. The lidar sensors 90 are then activated and an average distance from each imaging lens 86 to the inner surfaces of the wall or walls of the storage container 24 is determined to adjust the focus of the selected imaging lens or imaging lenses and to also adjust the amount of light emitted by the light source 88 to optimize the clarity of the images taken by the camera unit 30. In this way, the present imaging unit 20 overcomes conventional camera autofocus processors' that are unable to sufficiently focus on near featureless and indistinguishable surfaces of the storage container because the interior spaces of railcars, trucks, tanks and storage containers are smooth with little to no color variations and varying light levels.

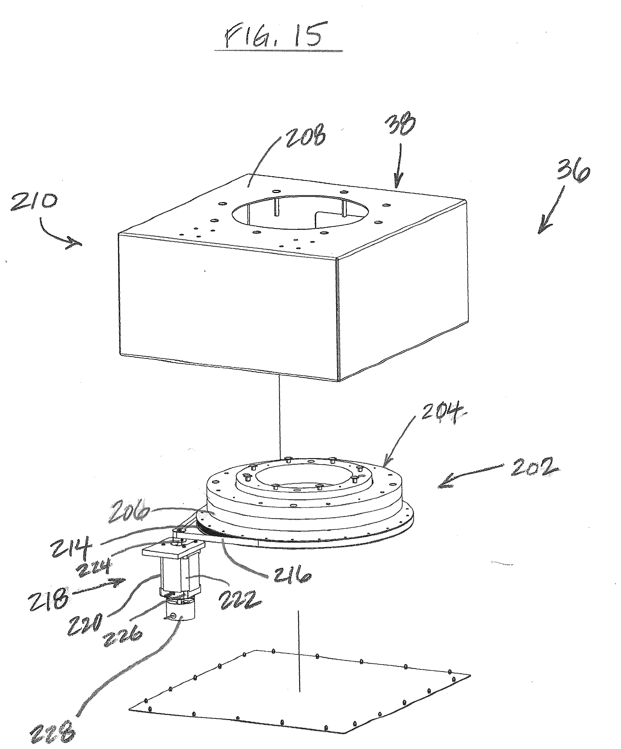

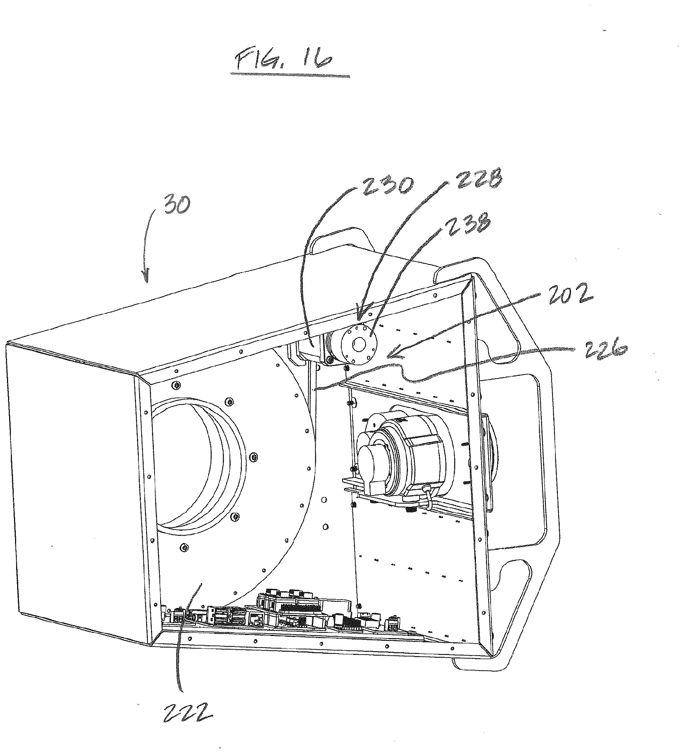

Referring to Figs. 15 and 16, another embodiment of a drive system 202 is shown where the drive system may be used to rotate the base member 36 relative to the top plate 40 and thereby the mounting arm 44 about the longitudinal axis and to rotate the camera unit 30 relative to the mounting arm 44 and about the lateral axis as described above.

In the illustrated embodiment, the drive system 202 includes a rotating member (not shown) similar to the rotating member 164 described above, where the rotating member includes a body having an upper projecting wall and a lower projecting wall. A bearing member (not shown) is attached to the body of the rotating member between the upper projecting wall 203 and the lower projecting wall. In operation, the bearing member helps to facilitate movement or rotation of the rotating member relative to a first ring member 204 and a second ring member 206.

The upper projecting wall 203 is attached to the top wall 208 of the housing 210 by fasteners and the lower projecting wall is attached to a drive gear 212 having an annular groove 214 extending about the peripheral surface of the drive gear, and a belt 216 seated in the groove 214. A belt drive 218 is configured to engage the belt 216 under tension and rotate the belt 216 and simultaneously rotate the drive gear 212. The belt drive 218 includes a housing 220 with a shaft 222 having a first end 224 extending outwardly from the housing and in engagement with the belt 216, and a second end 226 coupled to a motor, such as an electric motor 228. The motor 228 is activated and rotates the shaft 222 where the motor may be any suitable motor.

While particular embodiments of the present imaging system are shown and described, it will be appreciated by those skilled in the art that changes and modifications may be made thereto without departing from the invention in its broader aspects and as set forth in the following claims.

## Claims

1. An imaging unit placed in an access opening of a storage container of a transport vehicle, the imaging unit comprising:
a mounting assembly including an upper member and a mounting arm extending from the upper member, the upper member configured to rotate the mounting arm about a longitudinal axis; and
a camera unit rotatably attached to the mounting arm and configured to rotate about a lateral axis that is transverse to the longitudinal axis,
wherein the camera unit is rotated about the longitudinal axis and the lateral axis to a designated position within the storage container and takes at least one image of the inner surfaces of the storage container.

2. The imaging unit of claim 1, wherein the upper member includes a top wall and a base member rotatably attached to the top wall, the mounting arm being attached to the base member.

3. The imaging unit of claim 1, wherein the mounting arm rotates 360 degrees about the longitudinal axis.

4. The imaging unit of claim 3, wherein the camera unit rotates 360 degrees about the lateral axis.

5. The imaging unit of claim 1, wherein the mounting arm rotates in a clockwise direction and a counterclockwise direction.

6. The imaging unit of claim 1, wherein the camera unit rotates in a clockwise direction and a counterclockwise direction.

7. The imaging unit of claim 1, wherein the camera unit includes at least one lens and two lidar sensors, the lidar sensors being on opposing sides of the lens.

8. The imaging unit of claim 7, wherein the camera unit includes at least one additional lens.

9. The imaging unit of claim 1, wherein the upper member of the mounting assembly includes two handles.

10. An imaging unit placed in an access opening of a storage container of a transport vehicle, the imaging unit comprising:
a mounting assembly including an upper member having a top wall and a base member rotatably attached to the top wall;
a mounting arm extending transversely from the base member, the base member configured to rotate the mounting arm about a longitudinal axis; and
a camera unit rotatably attached to the mounting arm and configured to rotate about a lateral axis that is transverse to the longitudinal axis, the camera unit includes at least one lens and a pair of lidar sensors positioned on opposing sides of the at least one lens; and
a controller in communication with the base member and the camera unit, the controller being configured to rotate the base member and the camera unit and control the operation of the camera unit,
wherein the camera unit is rotated about the longitudinal axis and the lateral axis to a designated position within the storage container and takes at least one image of the inner surfaces of the storage container.

11. The imaging unit of claim 10, wherein the mounting arm rotates 360 degrees about the longitudinal axis.

12. The imaging unit of claim 11, wherein the camera unit rotates 360 degrees about the lateral axis.

13. The imaging unit of claim 10, wherein the mounting arm rotates in a clockwise direction and a counterclockwise direction.

14. The imaging unit of claim 13, wherein the camera unit rotates in a clockwise direction and a counterclockwise direction.

15. The imaging unit of claim 10, wherein the camera unit includes at least one additional lens.
